# EUROPEAN PATENT SPECIFICATION

(11) **EP 4 113 253 B1**
(45) Date of publication and mention of the grant of the patent: **22.04.2026**
(21) Application number: 21184851.0
(22) Date of filing: 09.07.2021
(51) Int. Cl.: G06F 3/01, G06F 3/0488

(54) **SYSTEM AND METHOD FOR NAVIGATING USER INTERFACES USING A HYBRID TOUCHLESS CONTROL MECHANISM**
SYSTEM UND VERFAHREN ZUR NAVIGATION VON BENUTZERSCHNITTSTELLEN UNTER VERWENDUNG EINES HYBRIDEN BERÜHRUNGSLOSEN STEUERUNGSMECHANISMUS
SYSTÈME ET PROCÉDÉ DE NAVIGATION DANS DES INTERFACES UTILISATEUR UTILISANT UN MÉCANISME DE COMMANDE HYBRIDE SANS CONTACT

(30) Priority: 02.07.2021 US 202117366862
(43) Date of publication of application: 04.01.2023
(73) Proprietor: Perfect Mobile Corp., New Taipei City 231 (TW)
(72) Inventor: CHENG, Chou, Tainan (TW); WU, Chieh-Chung, 231 New Taipei City (TW)
(74) Representative: Stöckeler, Ferdinand

(56) References cited:
- EP-A1- 3 540 569
- WO-A1-2021/238995
- CN-A- 111 651 040
- US-A1- 2014 104 168
- US-A1- 2019 297 271

## Description

### CROSS-REFERENCE TO RELATED APPLICATION

This application claims priority to US 2022/0007816.

### TECHNICAL FIELD

The present disclosure generally relates to touchless control of user interfaces and more particularly, to a system and method for navigating user interfaces using a hybrid touchless control mechanism.

### BACKGROUND

As part of social distancing measures during the COVID-19 pandemic, health experts have recommended that people avoid hugging and shaking hands in order to reduce the likelihood of transmission. A great deal of effort has also been placed on cleaning and disinfecting high-touch surfaces found in public spaces. These surfaces may be found, for example, on electronic equipment utilized by multiple individuals. Such electronic equipment may include, for example, a makeup kiosk located in a retail establishment where individuals experience virtual application of makeup effects by interacting with the makeup kiosk. As it is preferable to avoid direct contact with high-touch surfaces when possible, there is a need for an improved mechanism for utilizing electronic devices shared by multiple individuals. CN 111 651 040 A discloses an interaction method and an electronic device for skin detection. US 2019/297271 A1 discloses a virtual makeup device including a camera and a display with a touch panel.

### SUMMARY

In accordance with one embodiment, a computing device for navigating a user interface using a hybrid touchless control mechanism according to claim 1 is provided.

Another embodiment is a system for navigating a user interface using a hybrid touchless control mechanism according to claim 7.

Another embodiment is a non-transitory computer-readable storage medium storing instructions to be implemented by a computing device for navigating a user interface using a hybrid touchless control mechanism according to claim 13.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a computing device for a hybrid touchless control mechanism for navigating user interfaces according to various embodiments of the present disclosure.
FIG. 2 is a schematic diagram of the computing device of FIG. 1 in accordance with various embodiments of the present disclosure.
FIG. 3 is a top-level flowchart illustrating examples of functionality implemented as portions of the computing device of FIG. 1 for implementing a hybrid touchless control mechanism for navigating user interfaces according to various embodiments of the present disclosure.
FIG. 4 illustrates the user performing a first finger vector type within the facial region using a single finger according to various embodiments of the present disclosure.
FIG. 5 shows examples of makeup toolbars for other facial features according to various embodiments of the present disclosure.
FIG. 6 illustrates the user performing a second finger vector type for selecting a makeup effect according to various embodiments of the present disclosure.
FIG. 7A and 7B illustrate how the user confirms selection of a makeup effect in the makeup toolbar according to various embodiments of the present disclosure.
FIG. 8 illustrates use of a first finger vector type involving a plurality of fingers within the facial region to zoom in and out of the facial region according to various embodiments of the present disclosure.
FIG. 9 illustrates an example of a target user action for initiating the virtual application of a selected makeup effect on the facial region according to various embodiments of the present disclosure.
FIG. 10 illustrates another example of a target user action for initiating the virtual application of a selected makeup effect on the facial region according to various embodiments of the present disclosure.
FIG. 11 illustrates another example of a target user action for initiating the virtual application of a selected makeup effect on the facial region according to various embodiments of the present disclosure.
FIG. 12 illustrates another example of a target user action for initiating the virtual application of a selected makeup effect on the facial region according to various embodiments of the present disclosure.

### DETAILED DESCRIPTION

A description of a system for implementing a hybrid touchless control mechanism for navigating user interfaces is described followed by a discussion of the operation of the components within the system. In particular, embodiments are disclosed for hybrid touchless control utilizing a combination of finger vector based control, facial expressions, and gestures or actions to allow users to navigate user interfaces without the need for an input device such a mouse or touchscreen interface.

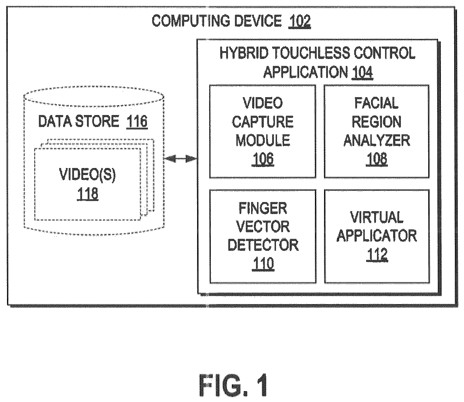

FIG. 1 is a block diagram of a computing device 102 in which the embodiments disclosed herein may be implemented. The computing device 102 may be embodied as a computing device such as, but not limited to, a smartphone, a tablet computing device, a laptop, and so on. A hybrid touchless control application 104 executes on a processor of the computing device 102 and includes a video capture module 106, a facial region analyzer 108, a finger vector detector 110, and a virtual applicator 112.

The video capture module 106 is configured to obtain a live video 118 of the user using, for example, a front facing camera on the computing device 102 and store the video 118 in a data store 116. The video 118 stored in the data store 116 may be encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), 360 degree video, 3D scan model, or any number of other digital formats.

The facial region analyzer 108 is configured to process the live video of the user and track the facial region of the user. A user interface displays the live video of the user and allows the user to apply makeup effects to the facial region of the user. The finger vector detector 110 is configured to determine the location of the user's hand and determine a finger vector type based on a direction in which one or more of the user's fingers are pointing relative to the facial region of the user. As described in more detail below, the facial region analyzer 108 determines such parameters as the finger vector type, the number of fingers being utilized by the user, the location where the finger vector occurs (*e.g.,* inside versus outside the facial region of the user) to determine which operations to execute in the user interface.

In response to detecting the occurrence of a first finger vector type within the facial region involving a single finger, finger vector detector 110 displays a makeup effects toolbar in the user interface. In response to detecting the occurrence of a second finger vector type involving the single finger, the finger vector detector 110 displays a selection tool for selecting a makeup effect in the makeup effects toolbar. The finger vector detector 110 obtains a selection of the one of the makeup effects based on manipulation by the user of the selection tool. The facial region analyzer 108 monitors for the occurrence of a target user action. In response to detecting the occurrence of a target user action, the virtual applicator 112 performs virtual application of the selected makeup effect on the facial region of the user.

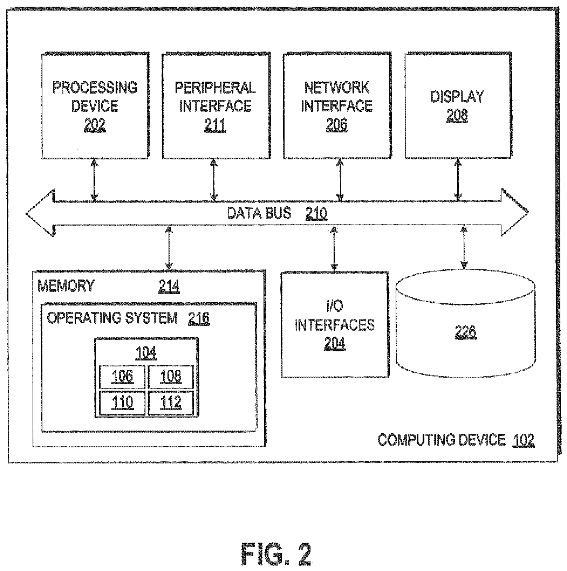

FIG. 2 illustrates a schematic block diagram of the computing device 102 in FIG. 1. The computing device 102 may be embodied as a desktop computer, portable computer, dedicated server computer, multiprocessor computing device, smart phone, tablet, and so forth. As shown in FIG. 2, the computing device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include a custom made processor, a central processing unit (CPU), or an auxiliary processor among several processors associated with the computing device 102, a semiconductor based microprocessor (in the form of a microchip), a macroprocessor, one or more application specific integrated circuits (ASICs), a plurality of suitably configured digital logic gates, and so forth.

The memory 214 may include one or a combination of volatile memory elements (*e.g.,* random-access memory (RAM, such as DRAM, and SRAM, *etc*.)) and nonvolatile memory elements (*e.g.,* ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components of the computing device 102 displayed in FIG. 1.

In accordance with such embodiments, the components are stored in memory 214 and executed by the processing device 202, thereby causing the processing device 202 to perform the operations/functions disclosed herein. For some embodiments, the components in the computing device 102 may be implemented by hardware and/or software.

Input/output interfaces 204 provide interfaces for the input and output of data. For example, where the computing device 102 comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

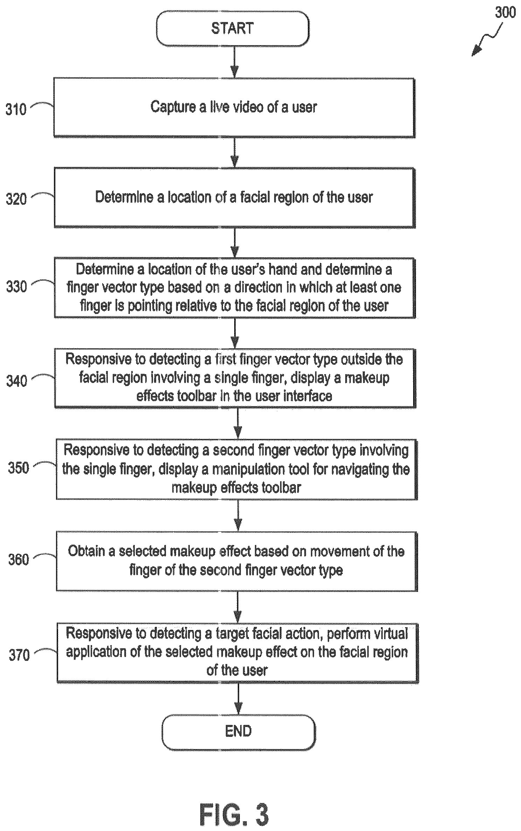

Reference is made to FIG. 3, which is a flowchart 300 in accordance with various embodiments for implementing a hybrid touchless control mechanism for navigating user interfaces, where the operations are performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is displayed. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the computing device 102 captures a live video of a user using a camera. At block 320, the computing device 102 determines a location of a facial region of the user. At block 330, the computing device 102 determines a location of the user's hand and determines a finger vector type based on a direction in which at least one finger is pointing relative to the facial region of the user.

At block 340, the computing device 102 displays a makeup effects toolbar in the user interface in response to the occurrence of a first finger vector type within the facial region involving a single finger. According to the invention, the first finger vector type within the facial region involving the single finger comprises an inward finger vector type corresponding to a single finger pointing towards a facial feature in the facial region of the user, and the makeup effects toolbar displayed in the user interface corresponds to makeup effects for the facial feature in the facial region that the single finger is pointing to. According to the invention, the second finger vector type comprises an outward finger vector type corresponding to the at least one finger pointing away the facial region of the user.

For some embodiments, the facial region analyzer 108 (FIG. 1) differentiates between finger vector types by first identifying feature points in the facial region of the user. The finger vector detector 110 (FIG. 1) detects a hand landmark feature and determines the direction and the area that an index finger points to. The finger vector detector 110 calculates an overlap area between the area that the finger is pointing to and the area occupied by the facial feature points. Based on this, the finger vector detector 110 determines whether the index finger points to a facial feature area of interest such as the lips or eyes. If the overlap area matches a predetermined facial feature, then the finger vector detector 110 determines that the finger vector type is an inward finger vector. If no facial feature is found in the overlap area, the finger vector detector 110 calculates the direction that the index finger is pointing to in order to determine whether any user interface widget is found in that direction, and the finger vector detector 110 determines that the finger vector type is an outward finger vector.

At block 350, the computing device 102 displays a selection tool for selecting a makeup effect in the makeup effects toolbar in response to the occurrence of a second finger vector type involving the single finger. At block 360, the computing device 102 obtains a selected makeup effect based on manipulation by the user of the selection tool.

At block 370, the computing device 102 performs virtual application of the selected makeup effect on the facial region of the user in response to detecting the occurrence of a target user action. The target user action may comprise, for example, a target facial expression, eyes blinking, the user's head nodding, or the user shaking her head side to side. Where the target user action comprises eyes blinking, the target user action may specifically comprise the user's eyes blinking a predetermined number of times in succession.

For some embodiments, the facial region analyzer 108 detects blinking eyes by identifying features points of the eyes and counting the number of times that changes to these feature points occur over a period of time to determine whether the eyes are blinking. For some embodiments, the facial region analyzer 108 detects that user's head is nodding by locating two-dimensional (2D) feature points of the facial area of the user. The facial region analyzer 108 then maps the 2D feature points to a three-dimensional (3D) model and monitors movement of the feature points on the 3D model to calculate the movement in the pitch, roll, and yaw directions. The facial region analyzer 108 determines that the user's head is nodding based on whether the movement in a particular direction (*e.g.,* pitch motion) changes a threshold number of times within a period of time. Similarly, the facial region analyzer 108 determines that the user's head is shaking based on whether the movement in a particular direction (*e*.*g*., yaw motion) changes a threshold number of times within a period of time. For some embodiments, virtual application of the selected makeup effect on the facial region of the user is performed responsive to a second occurrence of the second finger vector type combined with a palm of the user's hand moving toward the computing device.

For some embodiments, the computing device 102 allows the user to zoom in or out of the facial region. In particular, the computing device 102 monitors for the occurrence of a first finger vector type involving a plurality of fingers within the facial region. In response to detecting the occurrence of a first finger vector type involving a plurality of fingers within the facial region, the computing device zooms in on the facial region as the plurality of fingers move apart from one another and zooms out on the facial region as the plurality of fingers move toward one another. Thereafter, the process in FIG. 3 ends.

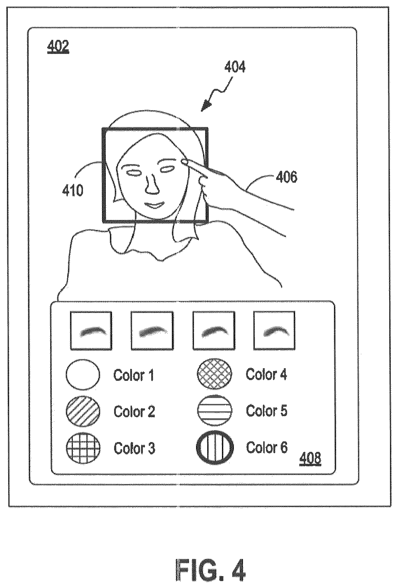

To further illustrate various aspects of the present invention, reference is made to the following figures. FIG. 4 illustrates the user performing a hand gesture 406 comprising a first finger vector type within the facial region 404 of the user using a single finger. As shown, the user performs a first finger vector type to display a makeup toolbar 408 in the user interface 402 where at least a portion of the user's hand is located in the facial region 404. In particular, the first finger vector type comprises an inward finger vector type corresponding to a single finger pointing towards a specific facial feature within the facial region 404 of the user.

The makeup toolbar 408 displayed in the user interface 402 corresponds to makeup effects for the facial feature in the facial region 404 that the single finger is pointing to. For some embodiments, a bounding box 410 is displayed around the facial region 404 to guide the user when the user is performing a finger vector type. When at least a portion of the user's finger enters the region defined by the bounding box 410, this causes the finger vector detector 110 in the computing device 102 of FIG. 1 to determine the finger vector type.

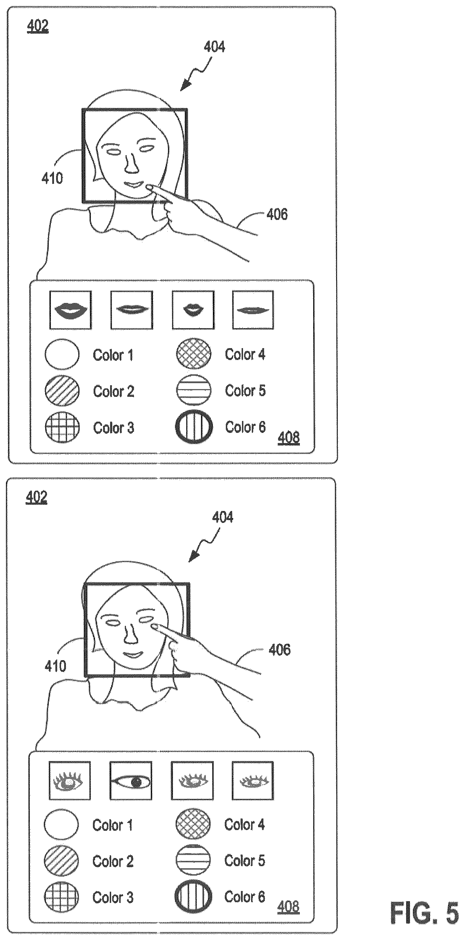

In the example shown in FIG. 4, the user performs an inward finger vector type and points to an eyebrow in the facial region 404, thereby causing a makeup toolbar 408 with various selectable eyebrow makeup effects to be displayed in the user interface 402. FIG. 5 shows examples of makeup toolbars 408 for other facial features. In the first example shown, the user performs an inward finger vector type that points to the user's lips, thereby causing a makeup toolbar 408 with various selectable lipstick makeup effects to be displayed in the user interface 402. In the second example shown, the user performs an inward finger vector type that points to an eye in the facial region 404, thereby causing a makeup toolbar 408 with various selectable eyeshadow effects to be displayed in the user interface 402.

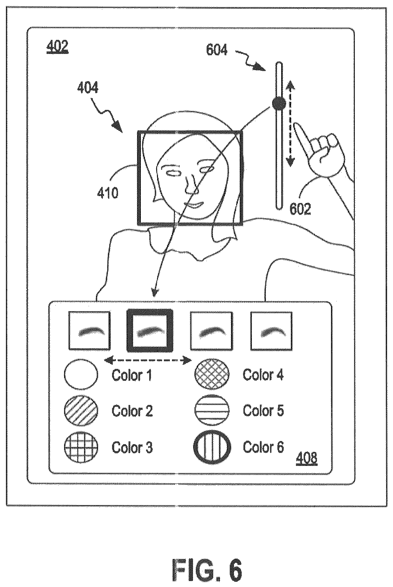

FIG. 6 illustrates the user performing a second finger vector type for selecting a makeup effect. Once a makeup toolbar 408 is displayed in response to the user performing a first finger vector type, the user makes a selection among the effects in the makeup toolbar 408 by performing another finger vector operation. In particular, the user performs a hand gesture 602 corresponding to a second finger vector type. The detection of the second finger vector type causes a selection tool 604 to be displayed. The selection tool 604 allows the user to navigate among the different makeup effects in the makeup toolbar 408 before making a selection.

According to the invention, the second finger vector type comprises an outward finger vector type corresponding to the user's finger pointing away the facial region 404 of the user. In this regard, the finger vector detector 110 executing in the computing device 102 (FIG. 1) differentiates between the first finger vector type and the second finger vector type based in part on the direction in which the one or more fingers used for the finger vector type are pointing to. For example, if the user's finger is pointing towards the facial region 404 and at least a portion of the finger is located within the bounding box 410, the finger vector detector 110 determines that the user has performed an inward finger vector type and performs a corresponding operation. If the user's finger is pointing away from the facial region 404, the finger vector detector 110 determines that the user has performed an outward finger vector type and performs a corresponding operation. Referring back to FIG. 6, the occurrence of the second finger vector type causes the selection tool 604 to be displayed, and the user then controls the selection tool 604 using finger movements. The selection tool 604 may comprise a slider or other suitable user interface component for switching between the various selectable makeup effects in the makeup toolbar 408.

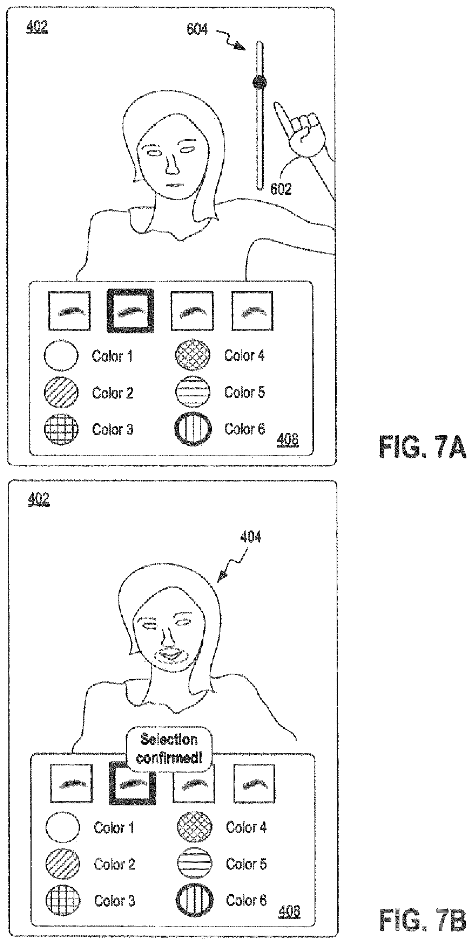

FIG. 7A and 7B illustrate how the user confirms selection of a makeup effect in the makeup toolbar. FIG. 7A illustrates the user using a hand gesture 602 to make a selection among the makeup effects in the makeup toolbar 408 using the selection tool 604. To confirm or enter the selection, the user may perform any of a number of predefined target actions or gestures.

The target actions may comprise, for example, a target facial expression, the user blinking her eyes, the user nodding her head, or the user shaking her head side to side. The target action may also comprise the user performing a second finger vector type combined with a palm of the user's hand moving toward the computing device. In the example shown in FIG. 7B, the user confirms the selection of the makeup effect by performing a target facial expression (i.e., smiling at the front facing camera). Upon confirmation of the makeup effect selection, the virtual applicator 112 (FIG. 1) performs virtual application of the selected makeup effect on the facial region 404 of the user.

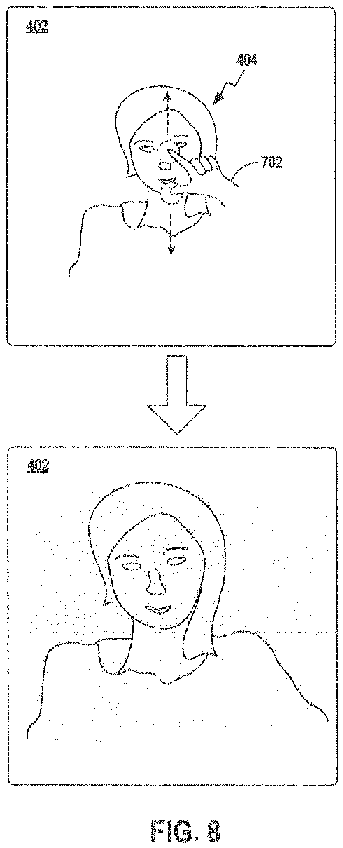

FIG. 8 illustrates use of a first finger vector type involving a plurality of fingers within the facial region to zoom in and out of the facial region. To zoom in and out of the facial region 404, the user performs a hand gesture 702 comprising a first finger vector type within the facial region 404. In particular, the user moves the fingers apart to zoom into the facial region 404 and moves the fingers together to zoom away from the facial region 404.

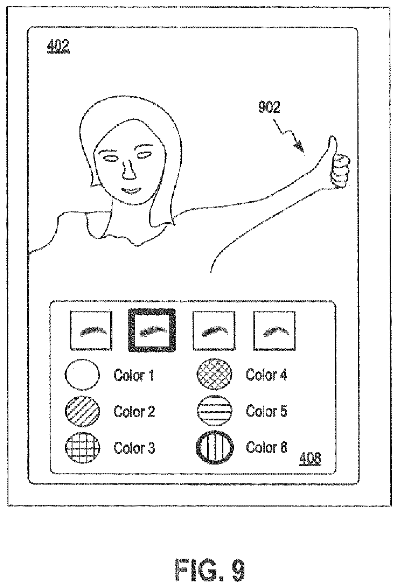

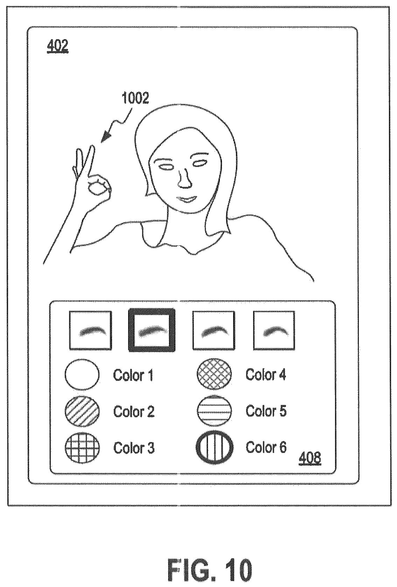

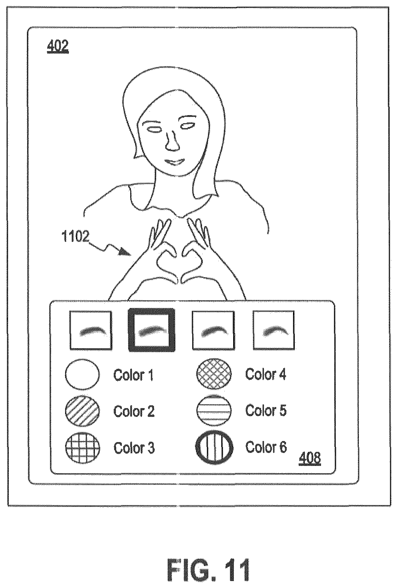

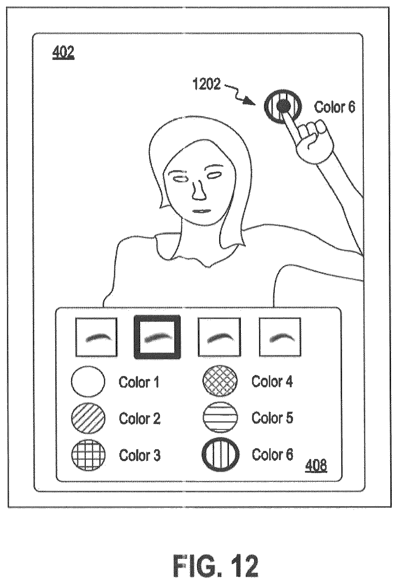

FIGS. 9-12 illustrate various examples of target user actions performed by the user for initiating the virtual application of a selected makeup effect on the facial region according to various embodiments of the present disclosure. FIG. 9 illustrates a target user action 902 comprising a thumbs up hand gesture performed by the user to initiate virtual application of the selected makeup effect. FIG. 10 illustrates a target user action 1002 comprising an okay hand gesture performed by the user to initiate virtual application of the selected makeup effect. FIG. 11 illustrates a target user action 1102 comprising a hand gesture involving the formation of a heart shape with the user's fingers to initiate virtual application of the selected makeup effect. FIG. 12 illustrates a target user action 1202 comprising placement of a finger on a makeup effect for a predetermined period of time to initiate virtual application of the selected makeup effect. The finger vector detector 110 (FIG. 1) detects placement of a finger on a makeup effect by identifying a hand landmark feature and obtaining the direction and area that an index finger is pointing to. The finger vector detector 110 calculates an overlap area between a region in the user interface and an area occupied by the index finger. The finger vector detector 110 determines whether the index finger points to the makeup effect toolbar. Other examples of target user actions include a heart finger sign gesture, voice input, and a kissing gesture performed by the user. The facial region analyzer 108 detects a kissing gesture by identifying feature points in the mouth region of the user's face and connecting these feature points to define a closed polygon. The facial region analyzer 108 then detects a kissing gesture by sensing whether the polygon transforms to a circular shape within a threshold period of time.

## Claims

1. A method implemented in a computing device (102) for navigating a user interface (402) using a hybrid touchless control mechanism, comprising:
capturing, by a camera, a live video (118) of a user;
determining a location of a facial region (404) of the user;
determining a location of the user's hand and determining a finger vector type based on a direction in which at least one finger is pointing relative to the facial region (404) of the user;
responsive to detecting a first finger vector type within the facial region (404) involving a single finger, displaying a makeup effects toolbar (408) in the user interface (402);
responsive to detecting a second finger vector type involving the single finger, displaying a selection tool (604) for selecting a makeup effect in the makeup effects toolbar (408);
obtaining a selected makeup effect based on manipulation by the user of the selection tool (604); and
responsive to detecting a target user action, performing virtual application of the selected makeup effect on the facial region (404) of the user, wherein the first finger vector type within the facial region (404) involving the single finger comprises an inward finger vector type corresponding to a single finger pointing towards a facial feature in the facial region (404) of the user, and wherein the makeup effects toolbar (408) displayed in the user interface (402) corresponds to makeup effects for the facial feature in the facial region (404) that the single finger is pointing to, wherein the second finger vector type comprises an outward finger vector type corresponding to the at least one finger pointing towards the makeup effects toolbar (408), wherein the occurrence of the second finger vector type causes the selection tool (604) to be displayed, and the user then controls the selection tool (604) using finger movement.

2. The method of claim 1, wherein the target user action (902, 1002, 1202) comprises one of: a target facial expression, eyes blinking, the user's head nodding, the user's head shaking side to side, or the user placing a finger over a makeup effect in the makeup effects toolbar (408).

3. The method of claim 2, wherein the target user action (902, 1002, 1202) comprises eyes blinking a predetermined number of times in succession.

4. The method of one of claims 1 to 3, wherein the target user action (902, 1002, 1202) comprises one of: placement of a finger on a makeup effect for a predetermined period of time, a thumbs up hand gesture (406, 602, 702), an okay hand gesture (406, 602, 702), formation of a heart shape with the user's fingers, a heart finger sign, voice input, a kissing gesture, or user input.

5. The method of one of claims 1 to 4, further comprising:
responsive to detecting a first finger vector type involving a plurality of fingers within the facial region:
zooming in on the facial region (404) as the plurality of fingers move apart from each other; and
zooming out on the facial region (404) as the plurality of fingers move toward each other.

6. The method of one of claims 1 to 5, wherein the virtual application of the selected makeup effect on the facial region (404) of the user is also performed responsive to a second occurrence of the second finger vector type combined with a palm of the user's hand moving toward the computing device (102).

7. A system for navigating a user interface (402) using a hybrid touchless control mechanism, comprising:
a memory (214) storing instructions;
a processor coupled to the memory (214) and configured by the instructions to at least:
capture, by a camera, a live video (118) of a user;
determine a location of a facial region (404) of the user by a facial region analyzer (108);
determine a finger vector type by a finger vector detector (110) based on a direction in which at least one finger is pointing relative to the facial region of the user;
responsive to detecting a first finger vector type within the facial region involving a single finger, display a makeup effects toolbar (408) in the user interface (402);
responsive to detecting a second finger vector type involving the single finger, display a selection tool (604) for selecting a makeup effect in the makeup effects toolbar (408);
obtain a makeup effect based on manipulation by the user of the selection tool; and
responsive to detecting a target user action (902, 1002, 1202), perform virtual application of the selected makeup effect on the facial region (404) of the user, wherein the first finger vector type within the facial region involving the single finger comprises an inward finger vector type corresponding to a single finger pointing towards a facial feature in the facial region (404) of the user,
and wherein the makeup effects toolbar (408) displayed in the user interface (402) corresponds to makeup effects for the facial feature in the facial region (404) that the single finger is pointing to, wherein the second finger vector type comprises an outward finger vector type corresponding to the at least one finger pointing towards the makeup effects toolbar (408), wherein the occurrence of the second finger vector type causes the selection tool (604) to be displayed, and the user then controls the selection tool (604) using finger movement.

8. The system of claim 7, wherein the target user action (902, 1002, 1202) comprises one of: a target facial expression, eyes blinking, the user's head nodding, the user's head shaking side to side, or the user placing a finger over a makeup effect in the makeup effects toolbar (408).

9. The system of claim 8, wherein the target user action (902, 1002, 1202) comprises eyes blinking a predetermined number of times in succession.

10. The system of one of claims 7 to 9, wherein the target user action (902, 1002, 1202) comprises one of: placement of a finger on a makeup effect for a predetermined period of time, a thumbs up hand gesture (406, 602, 702), an okay hand gesture (406, 602, 702), formation of a heart shape with the user's fingers, a heart finger sign, voice input, a kissing gesture, or user input.

11. The system of one of claims 7 to 10, wherein the processor is further configured to:
responsive to detecting a first finger vector type involving a plurality of fingers within the facial region (404):
zoom in on the facial region (404) as the plurality of fingers move apart from each other; and
zoom out on the facial region (404) as the plurality of fingers move toward each other.

12. The system of one of claims 7 to 11, wherein the virtual application of the selected makeup effect on the facial region (404) of the user is also performed responsive to a second occurrence of the second finger vector type combined with a palm of the user's hand moving toward the computing device (102).

13. A non-transitory computer-readable storage medium storing instructions to be implemented by a computing device (102) having a processor for navigating a user interface (402) using a hybrid touchless control mechanism, wherein the instructions, when executed by the processor, cause the computing device (102) to at least:
capture, by a camera, a live video (118) of a user;
determine a location of a facial region (404) of the user by a facial region analyzer (108);
determine a finger vector type by a finger vector detector (110) based on a direction in which at least one finger is pointing relative to the facial region (404) of the user;
responsive to detecting a first finger vector type within the facial region (404) involving a single finger, display a makeup effects toolbar (408) in the user interface (402);
responsive to detecting a second finger vector type involving the single finger, display a selection tool (604) for selecting a makeup effect in the makeup effects toolbar (408);
obtain a makeup effect based on manipulation by the user of the selection tool (604); and
responsive to detecting a target user action, perform virtual application of the selected makeup effect on the facial region (404) of the user, wherein the first finger vector type within the facial region (404) involving the single finger comprises an inward finger vector type corresponding to a single finger pointing towards a facial feature in the facial region (404) of the user, and
wherein the makeup effects toolbar (408) displayed in the user interface (402) corresponds to makeup effects for the facial feature in the facial region (404) that the single finger is pointing to, wherein the second finger vector type comprises an outward finger vector type corresponding to the at least one finger pointing towards the makeup effects toolbar (408), wherein the occurrence of the second finger vector type causes the selection tool (604) to be displayed, and the user then controls the selection tool (604) using finger movement.

14. The non-transitory computer-readable storage medium of claim 13, wherein the target user action (902, 1002, 1202) comprises one of: a target facial expression, eyes blinking, the user's head nodding, the user's head shaking side to side, or the user placing a finger over a makeup effect in the makeup effects toolbar (408).

## Patentansprüche

1. Ein Verfahren, das in einer Rechenvorrichtung (102) implementiert ist, zum Navigieren einer Benutzerschnittstelle (402) unter Verwendung eines hybriden berührungslosen Steuermechanismus, das folgende Schritte aufweist:
Aufnehmen, durch eine Kamera, eines Live-Videos (118) eines Benutzers;
Bestimmen einer Position einer Gesichtsregion (404) des Benutzers;
Bestimmen einer Position der Hand des Benutzers und Bestimmen eines Fingervektortyps basierend auf einer Richtung, in die zumindest ein Finger relativ zu der Gesichtsregion (404) des Benutzers zeigt;
ansprechend auf ein Erfassen eines ersten Fingervektortyps innerhalb der Gesichtsregion (404), der einen einzelnen Finger betrifft, Anzeigen einer Make-up-Effekte-Werkzeugleiste (408) in der Benutzerschnittstelle (402);
ansprechend auf ein Erfassen eines zweiten Fingervektortyps, der den einzelnen Finger betrifft, Anzeigen eines Auswahlwerkzeugs (604) zum Auswählen eines Make-up-Effekts in der Make-up-Effekte-Werkzeugleiste (408);
Erhalten eines ausgewählten Make-up-Effekts basierend auf einer Manipulation des Auswahlwerkzeugs (604) durch den Benutzer; und
ansprechend auf ein Erfassen einer Zielbenutzeraktion, Durchführen einer virtuellen Anwendung des ausgewählten Make-up-Effekts auf die Gesichtsregion (404) des Benutzers, wobei der erste Fingervektortyp innerhalb der Gesichtsregion (404), der den einzelnen Finger betrifft, einen nach innen gerichteten Fingervektortyp aufweist, der einem einzelnen Finger entspricht, der auf ein Gesichtsmerkmal in der Gesichtsregion (404) des Benutzers zeigt, und wobei die Make-up-Effekte-Werkzeugleiste (408), die in der Benutzerschnittstelle (402) angezeigt ist, Make-up-Effekten für das Gesichtsmerkmal in der Gesichtsregion (404) entspricht, auf das der einzelne Finger zeigt, wobei der zweite Fingervektortyp einen nach außen gerichteten Fingervektortyp aufweist, der dem zumindest einen Finger entspricht, der auf die Make-up-Effekte-Werkzeugleiste (408) zeigt, wobei das Auftreten des zweiten Fingervektortyps bewirkt, dass das Auswahlwerkzeug (604) angezeigt wird, und der Benutzer dann das Auswahlwerkzeug (604) unter Verwendung einer Fingerbewegung steuert.

2. Das Verfahren gemäß Anspruch 1, wobei die Zielbenutzeraktion (902, 1002, 1202) eines der Folgenden aufweist: einen Zielgesichtsausdruck, ein Blinken der Augen, ein Nicken des Kopfes des Benutzers, ein Schütteln des Kopfes des Benutzers von Seite zu Seite oder ein Platzieren eines Fingers über einen Make-up-Effekt in der Make-up-Effekte-Werkzeugleiste (408) durch den Benutzer.

3. Das Verfahren gemäß Anspruch 2, wobei die Zielbenutzeraktion (902, 1002, 1202) ein Blinken der Augen eine vorbestimmte Anzahl von Malen in Folge aufweist.

4. Das Verfahren gemäß einem der Ansprüche 1 bis 3, wobei die Zielbenutzeraktion (902, 1002, 1202) eines der Folgenden aufweist: eine Platzierung eines Fingers auf einem Make-up-Effekt für eine vorbestimmte Zeitdauer, eine Daumen-nach-oben-Handgeste (406, 602, 702), eine Okay-Handgeste (406, 602, 702), eine Bildung einer Herzform mit den Fingern des Benutzers, ein Herzfingerzeichen, eine Spracheingabe, eine Küssgeste oder eine Benutzereingabe.

5. Das Verfahren gemäß einem der Ansprüche 1 bis 4, das ferner folgende Schritte aufweist:
ansprechend auf ein Erfassen eines ersten Fingervektortyps, der eine Mehrzahl von Fingern innerhalb der Gesichtsregion betrifft:
Hineinzoomen auf die Gesichtsregion (404), während sich die Mehrzahl von Fingern voneinander weg bewegt; und
Herauszoomen auf die Gesichtsregion (404), während sich die Mehrzahl von Fingern aufeinander zu bewegt.

6. Das Verfahren gemäß einem der Ansprüche 1 bis 5, wobei die virtuelle Anwendung des ausgewählten Make-up-Effekts auf die Gesichtsregion (404) des Benutzers auch ansprechend auf ein zweites Auftreten des zweiten Fingervektortyps kombiniert mit einer Handfläche der Hand des Benutzers, die sich in Richtung der Rechenvorrichtung (102) bewegt, durchgeführt wird.

7. Ein System zum Navigieren einer Benutzerschnittstelle (402) unter Verwendung eines hybriden berührungslosen Steuermechanismus, das folgende Merkmale aufweist:
einen Speicher (214), der Anweisungen speichert;
einen Prozessor, der mit dem Speicher (214) gekoppelt ist und durch die Anweisungen zumindest zu Folgendem konfiguriert ist:
Aufnehmen, durch eine Kamera, eines Live-Videos (118) eines Benutzers;
Bestimmen einer Position einer Gesichtsregion (404) des Benutzers durch einen Gesichtsregionsanalysator (108);
Bestimmen eines Fingervektortyps durch einen Fingervektordetektor (110) basierend auf einer Richtung, in die zumindest ein Finger relativ zu der Gesichtsregion des Benutzers zeigt;
ansprechend auf ein Erfassen eines ersten Fingervektortyps innerhalb der Gesichtsregion, der einen einzelnen Finger betrifft, Anzeigen einer Make-up-Effekte-Werkzeugleiste (408) in der Benutzerschnittstelle (402);
ansprechend auf ein Erfassen eines zweiten Fingervektortyps, der den einzelnen Finger betrifft, Anzeigen eines Auswahlwerkzeugs (604) zum Auswählen eines Make-up-Effekts in der Make-up-Effekte-Werkzeugleiste (408);
Erhalten eines Make-up-Effekts basierend auf einer Manipulation des Auswahlwerkzeugs durch den Benutzer; und
ansprechend auf ein Erfassen einer Zielbenutzeraktion (902, 1002, 1202), Durchführen einer virtuellen Anwendung des ausgewählten Make-up-Effekts auf die Gesichtsregion (404) des Benutzers, wobei der erste Fingervektortyp innerhalb der Gesichtsregion, der den einzelnen Finger betrifft, einen nach innen gerichteten Fingervektortyp aufweist, der einem einzelnen Finger entspricht, der auf ein Gesichtsmerkmal in der Gesichtsregion (404) des Benutzers zeigt, und wobei die Make-up-Effekte-Werkzeugleiste (408), die in der Benutzerschnittstelle (402) angezeigt ist, Make-up-Effekten für das Gesichtsmerkmal in der Gesichtsregion (404) entspricht, auf das der einzelne Finger zeigt, wobei der zweite Fingervektortyp einen nach außen gerichteten Fingervektortyp aufweist, der dem zumindest einen Finger entspricht, der auf die Make-up-Effekte-Werkzeugleiste (408) zeigt, wobei das Auftreten des zweiten Fingervektortyps bewirkt, dass das Auswahlwerkzeug (604) angezeigt wird, und der Benutzer dann das Auswahlwerkzeug (604) unter Verwendung einer Fingerbewegung steuert.

8. Das System gemäß Anspruch 7, wobei die Zielbenutzeraktion (902, 1002, 1202) eines der Folgenden aufweist: einen Zielgesichtsausdruck, ein Blinken der Augen, ein Nicken des Kopfes des Benutzers, ein Schütteln des Kopfes des Benutzers von Seite zu Seite oder ein Platzieren eines Fingers über einen Make-up-Effekt in der Make-up-Effekte-Werkzeugleiste (408) durch den Benutzer.

9. Das System gemäß Anspruch 8, wobei die Zielbenutzeraktion (902, 1002, 1202) ein Blinken der Augen eine vorbestimmte Anzahl von Malen in Folge aufweist.

10. Das System gemäß einem der Ansprüche 7 bis 9, wobei die Zielbenutzeraktion (902, 1002, 1202) eines der Folgenden aufweist: eine Platzierung eines Fingers auf einem Make-up-Effekt für eine vorbestimmte Zeitdauer, eine Daumen-nach-oben-Handgeste (406, 602, 702), eine Okay-Handgeste (406, 602, 702), eine Bildung einer Herzform mit den Fingern des Benutzers, ein Herzfingerzeichen, eine Spracheingabe, eine Küssgeste oder eine Benutzereingabe.

11. Das System gemäß einem der Ansprüche 7 bis 10, wobei der Prozessor ferner zu Folgendem konfiguriert ist:
ansprechend auf ein Erfassen eines ersten Fingervektortyps, der eine Mehrzahl von Fingern innerhalb der Gesichtsregion (404) betrifft:
Hineinzoomen auf die Gesichtsregion (404), während sich die Mehrzahl von Fingern voneinander weg bewegt; und
Herauszoomen auf die Gesichtsregion (404), während sich die Mehrzahl von Fingern aufeinander zu bewegt.

12. Das System gemäß einem der Ansprüche 7 bis 11, wobei die virtuelle Anwendung des ausgewählten Make-up-Effekts auf die Gesichtsregion (404) des Benutzers auch ansprechend auf ein zweites Auftreten des zweiten Fingervektortyps kombiniert mit einer Handfläche der Hand des Benutzers, die sich in Richtung der Rechenvorrichtung (102) bewegt, durchgeführt wird.

13. Ein nichtflüchtiges computerlesbares Speichermedium, das Anweisungen speichert, die durch eine Rechenvorrichtung (102) zu implementieren sind, die einen Prozessor zum Navigieren einer Benutzerschnittstelle (402) unter Verwendung eines hybriden berührungslosen Steuermechanismus aufweist, wobei die Anweisungen, wenn dieselben durch den Prozessor ausgeführt werden, die Rechenvorrichtung (102) zumindest zu Folgendem veranlassen:
Aufnehmen, durch eine Kamera, eines Live-Videos (118) eines Benutzers;
Bestimmen einer Position einer Gesichtsregion (404) des Benutzers durch einen Gesichtsregionsanalysator (108);
Bestimmen eines Fingervektortyps durch einen Fingervektordetektor (110) basierend auf einer Richtung, in die zumindest ein Finger relativ zu der Gesichtsregion (404) des Benutzers zeigt;
ansprechend auf ein Erfassen eines ersten Fingervektortyps innerhalb der Gesichtsregion (404), der einen einzelnen Finger betrifft, Anzeigen einer Make-up-Effekte-Werkzeugleiste (408) in der Benutzerschnittstelle (402);
ansprechend auf ein Erfassen eines zweiten Fingervektortyps, der den einzelnen Finger betrifft, Anzeigen eines Auswahlwerkzeugs (604) zum Auswählen eines Make-up-Effekts in der Make-up-Effekte-Werkzeugleiste (408);
Erhalten eines Make-up-Effekts basierend auf einer Manipulation des Auswahlwerkzeugs (604) durch den Benutzer; und
ansprechend auf ein Erfassen einer Zielbenutzeraktion, Durchführen einer virtuellen Anwendung des ausgewählten Make-up-Effekts auf die Gesichtsregion (404) des Benutzers, wobei der erste Fingervektortyp innerhalb der Gesichtsregion (404), der den einzelnen Finger betrifft, einen nach innen gerichteten Fingervektortyp aufweist, der einem einzelnen Finger entspricht, der auf ein Gesichtsmerkmal in der Gesichtsregion (404) des Benutzers zeigt, und wobei die Make-up-Effekte-Werkzeugleiste (408), die in der Benutzerschnittstelle (402) angezeigt ist, Make-up-Effekten für das Gesichtsmerkmal in der Gesichtsregion (404) entspricht, auf das der einzelne Finger zeigt, wobei der zweite Fingervektortyp einen nach außen gerichteten Fingervektortyp aufweist, der dem zumindest einen Finger entspricht, der auf die Make-up-Effekte-Werkzeugleiste (408) zeigt, wobei das Auftreten des zweiten Fingervektortyps bewirkt, dass das Auswahlwerkzeug (604) angezeigt wird, und der Benutzer dann das Auswahlwerkzeug (604) unter Verwendung einer Fingerbewegung steuert.

14. Das nichtflüchtige computerlesbare Speichermedium gemäß Anspruch 13, wobei die Zielbenutzeraktion (902, 1002, 1202) eines der Folgenden aufweist: einen Zielgesichtsausdruck, ein Blinken der Augen, ein Nicken des Kopfes des Benutzers, ein Schütteln des Kopfes des Benutzers von Seite zu Seite oder ein Platzieren eines Fingers über einen Make-up-Effekt in der Make-up-Effekte-Werkzeugleiste (408) durch den Benutzer.

## Revendications

1. Procédé mis en œuvre dans un dispositif informatique (102) pour naviguer dans une interface utilisateur (402) à l'aide d'un mécanisme de commande hybride sans contact, comprenant :
la capture, à l'aide d'une caméra, d'une vidéo en direct (118) d'un utilisateur ;
la détermination de l'emplacement d'une région faciale (404) de l'utilisateur ;
la détermination de l'emplacement de la main de l'utilisateur et la détermination d'un type de vecteur de doigt sur la base d'une direction dans laquelle au moins un doigt pointe par rapport à la région faciale (404) de l'utilisateur ;
en réponse à la détection d'un premier type de vecteur de doigt dans la région faciale (404) impliquant un seul doigt, en affichant une barre d'outils d'effets de maquillage (408) dans l'interface utilisateur (402) ;
en réponse à la détection d'un deuxième type de vecteur de doigt impliquant le doigt unique, affichant un outil de sélection (604) pour sélectionner un effet de maquillage dans la barre d'outils des effets de maquillage (408) ;
l'obtention d'un effet de maquillage sélectionné sur la base de la manipulation par l'utilisateur de l'outil de sélection (604) ; et
en réponse à la détection d'une action cible de l'utilisateur, effectuer une application virtuelle de l'effet de maquillage sélectionné sur la région faciale (404) de l'utilisateur, dans lequel le premier type de vecteur de doigt dans la région faciale (404) impliquant le doigt unique comprend un type de vecteur de doigt vers l'intérieur correspondant à un doigt unique pointant vers une caractéristique faciale dans la région faciale (404) de l'utilisateur, et dans lequel la barre d'outils d'effets de maquillage (408) affichée dans l'interface utilisateur (402) correspond à des effets de maquillage pour la caractéristique faciale dans la région faciale (404) vers laquelle pointe le doigt unique, dans lequel le deuxième type de vecteur de doigt comprend un type de vecteur de doigt vers l'extérieur correspondant à au moins un doigt pointant vers la barre d'outils d'effets de maquillage (408), dans lequel l'apparition du deuxième type de vecteur de doigt provoque l'affichage de l'outil de sélection (604), et l'utilisateur contrôle alors l'outil de sélection (604) à l'aide du mouvement du doigt.

2. Procédé selon la revendication 1, dans lequel l'action cible de l'utilisateur (902, 1002, 1202) comprend l'un : d'une expression faciale cible, d'un clignement des yeux, d'un hochement de tête de l'utilisateur, d'un mouvement de tête de l'utilisateur d'un côté à l'autre, ou le fait que l'utilisateur place un doigt sur un effet de maquillage dans la barre d'outils des effets de maquillage (408).

3. Procédé selon la revendication 2, dans lequel l'action cible de l'utilisateur (902, 1002, 1202) comprend le clignement des yeux un nombre prédéterminé de fois successivement.

4. Procédé selon l'une des revendications 1 à 3, dans lequel l'action cible de l'utilisateur (902, 1002, 1202) comprend l'un : du placement d'un doigt sur un effet de maquillage pendant une période de temps prédéterminée, d'un geste de la main avec le pouce levé (406, 602, 702), d'un geste de la main signifiant « OK » (406, 602, 702), d'une formation d'une forme de cœur avec les doigts de l'utilisateur, d'un signe du cœur avec les doigts, d'une entrée vocale, d'un geste d'embrassade ou d'une entrée de l'utilisateur.

5. Procédé selon l'une des revendications 1 à 4, comprenant en outre :
en réponse à la détection d'un premier type de vecteur de doigt impliquant une pluralité de doigts dans la région faciale :
zoomer sur la région faciale (404) lorsque la pluralité de doigts s'écartent les uns des autres ; et
dézoomer sur la région faciale (404) lorsque la pluralité de doigts se rapprochent les uns des autres.

6. Procédé selon l'une des revendications 1 à 5, dans lequel l'application virtuelle de l'effet de maquillage sélectionné sur la région faciale (404) de l'utilisateur est également effectuée en réponse à une deuxième occurrence du deuxième type de vecteur de doigt combiné à un mouvement de la paume de la main de l'utilisateur vers le dispositif informatique (102).

7. Système de navigation dans une interface utilisateur (402) utilisant un mécanisme de commande hybride sans contact, comprenant :
une mémoire (214) stockant des instructions ;
un processeur couplé à la mémoire (214) et configuré par les instructions pour au moins :
capturer, à l'aide d'une caméra, une vidéo en direct (118) d'un utilisateur ;
déterminer l'emplacement d'une région faciale (404) de l'utilisateur à l'aide d'un analyseur de région faciale (108) ;
déterminer un type de vecteur de doigt à l'aide d'un détecteur de vecteur de doigt (110) sur la base d'une direction dans laquelle au moins un doigt pointe par rapport à la région faciale de l'utilisateur ;
en réponse à la détection d'un premier type de vecteur de doigt dans la région faciale impliquant un seul doigt, l'affichage d'une barre d'outils d'effets de maquillage (408) dans l'interface utilisateur (402) ;
en réponse à la détection d'un deuxième type de vecteur de doigt impliquant le doigt unique, l'affichage d'un outil de sélection (604) pour sélectionner un effet de maquillage dans la barre d'outils des effets de maquillage (408) ;
l'obtention d'un effet de maquillage sur la base de la manipulation par l'utilisateur de l'outil de sélection ; et
en réponse à la détection d'une action cible de l'utilisateur (902, 1002, 1202), la réalisation d'une application virtuelle de l'effet de maquillage sélectionné sur la région faciale (404) de l'utilisateur, dans lequel le premier type de vecteur de doigt dans la région faciale impliquant le doigt unique comprend un type de vecteur de doigt vers l'intérieur correspondant à un doigt unique pointant vers une caractéristique faciale dans la région faciale (404) de l'utilisateur, et dans lequel la barre d'outils d'effets de maquillage (408) affichée dans l'interface utilisateur (402) correspond à des effets de maquillage pour la caractéristique faciale dans la région faciale (404) vers laquelle pointe le doigt unique, dans lequel le deuxième type de vecteur de doigt comprend un type de vecteur de doigt vers l'extérieur correspondant à au moins un doigt pointant vers la barre d'outils d'effets de maquillage (408), dans lequel l'apparition du deuxième type de vecteur de doigt provoque l'affichage de l'outil de sélection (604), et l'utilisateur contrôle alors l'outil de sélection (604) à l'aide du mouvement du doigt.

8. Système selon la revendication 7, dans lequel l'action cible de l'utilisateur (902, 1002, 1202) comprend l'un : d'une expression faciale cible, d'un clignement des yeux, d'un hochement de tête de l'utilisateur, d'un mouvement de tête de l'utilisateur d'un côté à l'autre, ou le fait que l'utilisateur place un doigt sur un effet de maquillage dans la barre d'outils des effets de maquillage (408).

9. Système selon la revendication 8, dans lequel l'action cible de l'utilisateur (902, 1002, 1202) comprend le clignement des yeux un nombre prédéterminé de fois successivement.

10. Système selon l'une des revendications 7 à 9, dans lequel l'action cible de l'utilisateur (902, 1002, 1202) comprend l'un : du placement d'un doigt sur un effet de maquillage pendant une période de temps prédéterminée, d'un geste de la main avec le pouce levé (406, 602, 702), d'un geste de la main signifiant « OK » (406, 602, 702), d'une formation d'une forme de cœur avec les doigts de l'utilisateur, d'un signe du cœur avec les doigts, d'une entrée vocale, d'un geste d'embrassade ou d'une entrée de l'utilisateur.

11. Système selon une des revendications 7 à 10, dans lequel le processeur est en outre configuré pour :
répondre à la détection d'un premier type de vecteur de doigt impliquant une pluralité de doigts dans la région faciale (404) :
zoomer sur la région faciale (404) lorsque la pluralité de doigts s'écartent les uns des autres ; et
dézoomer sur la région faciale (404) lorsque la pluralité de doigts se rapprochent les uns des autres.

12. Système selon l'une des revendications 7 à 11, dans lequel l'application virtuelle de l'effet de maquillage sélectionné sur la région faciale (404) de l'utilisateur est également effectuée en réponse à une deuxième occurrence du deuxième type de vecteur de doigt combiné à un mouvement de la paume de la main de l'utilisateur vers le dispositif informatique (102).

13. Support de stockage non transitoire lisible par ordinateur stockant des instructions devant être mises en œuvre par un dispositif informatique (102) comportant un processeur pour naviguer dans une interface utilisateur (402) à l'aide d'un mécanisme de contrôle hybride sans contact, dans lequel les instructions, lorsqu'elles sont exécutées par le processeur, amènent le dispositif informatique (102) à au moins:
capturer, à l'aide d'une caméra, une vidéo en direct (118) d'un utilisateur ;
déterminer l'emplacement d'une région faciale (404) de l'utilisateur à l'aide d'un analyseur de région faciale (108) ;
déterminer un type de vecteur de doigt à l'aide d'un détecteur de vecteur de doigt (110) sur la base d'une direction dans laquelle au moins un doigt pointe par rapport à la région faciale de (404) l'utilisateur ;
en réponse à la détection d'un premier type de vecteur de doigt dans la région faciale (404) impliquant un seul doigt, l'affichage d'une barre d'outils d'effets de maquillage (408) dans l'interface utilisateur (402) ;
en réponse à la détection d'un deuxième type de vecteur de doigt impliquant le doigt unique, l'affichage d'un outil de sélection (604) pour sélectionner un effet de maquillage dans la barre d'outils des effets de maquillage (408) ;
l'obtention d'un effet de maquillage sur la base de la manipulation par l'utilisateur de l'outil de sélection (604) ; et
en réponse à la détection d'une action cible de l'utilisateur, effectuer une application virtuelle de l'effet de maquillage sélectionné sur la région faciale (404) de l'utilisateur, dans lequel le premier type de vecteur de doigt dans la région faciale (404) impliquant le doigt unique comprend un type de vecteur de doigt vers l'intérieur correspondant à un doigt unique pointant vers une caractéristique faciale dans la région faciale (404) de l'utilisateur, et dans lequel la barre d'outils d'effets de maquillage (408) affichée dans l'interface utilisateur (402) correspond à des effets de maquillage pour la caractéristique faciale dans la région faciale (404) vers laquelle pointe le doigt unique, dans lequel le deuxième type de vecteur de doigt comprend un type de vecteur de doigt vers l'extérieur correspondant à au moins un doigt pointant vers la barre d'outils d'effets de maquillage (408), dans lequel l'apparition du deuxième type de vecteur de doigt provoque l'affichage de l'outil de sélection (604), et l'utilisateur contrôle alors l'outil de sélection (604) à l'aide du mouvement du doigt.

14. Support de stockage non transitoire lisible par ordinateur selon la revendication 13, dans lequel l'action cible de l'utilisateur (902, 1002, 1202) comprend l'un : d'une expression faciale cible, d'un clignement des yeux, d'un hochement de tête de l'utilisateur, d'un mouvement de tête de l'utilisateur d'un côté à l'autre, ou le fait que l'utilisateur place un doigt sur un effet de maquillage dans la barre d'outils des effets de maquillage (408).
